(19) Europäisches Patentamt
European Patent Office
Office européen des brevets

(11) **EP 3 114 253 B1**

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(21) Anmeldenummer: **15708468.2**

(22) Anmeldetag: **26.02.2015**

(51) Int Cl.:
*C23F 1/46* (2006.01)   *C23G 1/36* (2006.01)
*C01G 49/10* (2006.01)   *C01B 7/01* (2006.01)
*C01B 7/07* (2006.01)

(86) Internationale Anmeldenummer:
**PCT/EP2015/053983**

(87) Internationale Veröffentlichungsnummer:
**WO 2015/132118 (11.09.2015 Gazette 2015/36)**

(54) **VORRICHTUNG ZUR AUFBEREITUNG VON METALLIONENHÄLTIGEN LÖSUNGEN**

DEVICE FOR TREATING METAL-ION CONTAINING SOLUTIONS

DISPOSITIF DE PRÉPARATION DE SOLUTIONS CONTENANT DES IONS MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2014 AT 501562014**

(43) Veröffentlichungstag der Anmeldung:
**11.01.2017 Patentblatt 2017/02**

(73) Patentinhaber:
• **Leonhartsberger, Michael**
**3552 Lengenfeld (AT)**
• **Österreicher, Markus**
**1050 Wien (AT)**

(72) Erfinder: **LEONHARTSBERGER, Ernst**
**A-3552 Lengenfeld (AT)**

(74) Vertreter: **Babeluk, Michael**
**Florianigasse 26/3**
**1080 Wien (AT)**

(56) Entgegenhaltungen:
**WO-A1-96/27554   AT-A4- 509 052**
**AT-B- 407 758   DE-T2- 60 125 221**

**Beschreibung**

Die Erfindung betrifft eine Vorrichtung zur Aufbereitung von metallionenhältigen Lösungen mittels thermischer Pyrohydrolyse, mit zumindest einem Pyrolysereaktor, mit einer Abgasreinigungsanlage mit zumindest einem Feststoffabscheider, insbesondere mit zumindest einem Staubzyklon zur Abtrennung von Feinstaubpartikeln, und zumindest einer Auslassleitung aus dem zumindest einen Feststoffabscheider, sowie ein Verfahren hierzu.

Die AT 407 758 B beschreibt ein Verfahren zur Gewinnung von Säuren, insbesondere Salzsäure aus metallionenhältigen Lösungen durch thermische Spaltung. Ähnliche Verfahren sind auch der AT 509 052 B1, DE 60125221 T2, WO 9627554 A1 sowie der EP 0 850 881 A1 zu entnehmen.

Ein Problem bei den im Stand der Technik beschriebenen Verfahren ist das Auftreten von Feinstaubpartikeln während der Pyrohydrolyse. So entstehen in Sprühröstanlagen feinpartikuläre Oxide mit einem mittleren Korndurchmesser von beispielsweise 50 $\mu$m bis 150 $\mu$m, wobei je nach Prozessführung Feinstanteile mit einem Durchmesser von beispielsweise 0,01 $\mu$m bis 1 $\mu$m auftreten können. Im Fließbettbetrieb weist der hier auftretende Feinanteil beispielsweise einen Durchmesser von 0,05 mm bis 2 mm auf. Aufgrund dieser Feinstaubanteile sind die Anforderungen an die Abgasreinigungsanlage der jeweiligen Anlagen hoch, wobei hier üblicherweise Staubzyklone als Feststoffabscheider eingesetzt werden, um Feinpulveranteile abzutrennen. Diese werden anschließend über zumindest eine Auslassleitung entweder einer Lagerung oder aber wiederum dem Pyrolysereaktor zugeführt. Der Transport der Feststoffe beruht hierbei üblicherweise allein auf der Schwerkraft.

Bei den im Stand der Technik beschriebenen Anlagen entstehen üblicherweise Strömungen entgegen der Austrittsrichtung der Feinpartikel, sodass diese den Feststoffabscheider, insbesondere Staubzyklon oder Elektrofilteranlage, nicht mehr verlassen und gegebenenfalls dessen Funktion beeinträchtigen. Daher verfügt der Staubzyklon hierbei über zumindest eine Sperreinrichtung, insbesondere Klappeneinrichtungen oder eine Zellradschleuse, die in unmittelbarer Nachbarschaft zum Staubzyklon in der Auslassleitung angeordnet ist. Diese Sperreinrichtung hat des Weiteren die Aufgabe, das Eindringen von Gasen, insbesondere Säuregase, in den Feststoffabscheider zu verhindern, wenn die Auslassleitung mit dem Pyrolysereaktor in Verbindung steht. Diese Gase sind bei den üblichen Temperaturen in der Höhe von mehr als 300°C bis 350°C inaktiv, bei Abkühlung auf etwa unter 200°C werden sie jedoch äußerst korrosiv. Die in die Auslassleitung aufsteigenden Gase aus dem Pyrolysereaktor können aufgrund der oben beschriebenen Strömungssituation in der Auslassleitung und in der Folge auch an der Sperreinrichtung auskondensieren, so dass es in der Praxis rasch zu einer Abnutzung und/oder Verstopfung der Sperreinrichtung kommt. Dies hat häufige Stillstände der Anlage sowie aufwendige und teuere Wartungs- und Reparaturarbeiten zur Folge.

Besonders drastisch ist dieses Problem bei Magnesiumoxidanlagen, die bei einem Temperaturbereich von 800°C bis 950°C für die thermische Spaltung arbeiten, wobei die Abgase üblicherweise eine Temperatur von etwa 500°C aufweisen. Steigen nun diese Abgase in die zumindest eine Auslassleitung in Richtung Feststoffabscheider, kann das basische Magnesiumoxid zur Verstopfung und Verklebung der Sperreinrichtungen führt, sobald die Temperatur der Abgase unter 300°C fällt. Dies liegt insbesondere auch an der hygroskopischen Eigenschaft der Magnesiumoxide, die mit dem während der Röstreaktion vorhandenen Wasserdampf und mit dem in der Reaktoratmosphäre vorhandenen Salzsäuregas reagieren.

Im Fließbettbetrieb werden üblicherweise Klappensysteme in der Auslassleitung angeordnet, die jedoch ebenfalls aufgrund der Korrosion durch eintretende Reaktionsgase, der hohen Betriebstemperaturen von 500°C bis 750°C sowie durch Verstopfung und Verlegung durch abgeschiedene Metalloxide in ihrem Betrieb beeinträchtigt werden.

Es ist daher Aufgabe der Erfindung, die Nachteile des Stands der Technik zu beseitigen, und insbesondere eine Vorrichtung zur Säureregeneration beziehungsweise Metalloxidgewinnung bereitzustellen, die kostengünstig einsetzbar ist und einen weitgehend störungsfreien Betrieb mit geringem Wartungsaufwand im Bereich der Feinstaubabscheidung aufweist.

Diese Aufgabe wird erfindungsgemäß durch die Vorrichtung der eingangs erwähnten Art dadurch gelöst, dass in der zumindest einen Auslassleitung zumindest eine Eindüsvorrichtung angeordnet ist. Über die Eindüsvorrichtung wird ein Gas oder Gasgemisch, beispielsweise Luft und/oder Abgase in die Auslassleitung eingebracht, so dass in diesem Bereich eine Strömung erzeugt wird, die den Abtransport der Feststoffanteile aus dem zumindest einen Feststoffabscheider unterstützt.

In einer besonders bevorzugten Ausführung der Erfindung weist die zumindest eine Eindüsvorrichtung zumindest eine Lavaldüse auf. Lavaldüsen sind nach dem Venturiprinzip gebaut und erlauben die Erreichung hoher Einströmgeschwindigkeiten, theoretisch bis in den Überschallbereich. Zudem sind sie bekanntermaßen in der Praxis wartungsfrei. Insbesondere bei Verwendung derartiger Düsen in der Eindüsvorrichtung kann zur Gänze auf eine im Stand der Technik übliche Sperreinrichtung, wie beispielsweise eine Zellradschleuse, in der Auslassleitung verzichtet werden. Dies verbessert zudem die Dichtigkeit der Anlage und vermindert das Auftreten von Falschluft.

In einer besonders bevorzugten Ausführung der Erfindung steht die zumindest eine Auslassleitung mit dem zumindest einen Pyrolysereaktor in Verbindung, wobei sich im Praxistest gezeigt hat, dass mit der erfindungsgemäßen Eindüsvorrichtung eine effektive Strömungsbarriere gegen die Rückströmung von Abgasen aus dem Pyrolysereaktor in die Auslassleitung erreicht wird. Untersuchungen haben des Weiteren gezeigt, dass die Zufuhr von zusätzlicher Luft in den Pyrolysereaktor die Bildung der Metalloxidpulver dahingehend verbessert, dass sie besser abzuscheiden sind und der Feinstaubanteil reduziert wird.

Alternativ hierzu ist zusätzlich zu der erfindungsgemäßen Eindüsvorrichtung zwischen dem zumindest einen Feststoffabscheider und der zumindest einen Auslassleitung zumindest eine Sperreinrichtung, insbesondere eine Klappeneinrichtung oder eine Zellradschleuse angeordnet. Damit wird die Betriebssicherheit der erfindungsgemäßen Anlage weiter erhöht.

Die erfindungsgemäße Eindüsvorrichtung ist besonders bevorzugt in Anlagen vorgesehen, in denen der zumindest eine Pyrolysereaktor eine Sprühröstanlage oder eine Fließbettanlage ist.

Des Weiteren wird die Aufgabe durch ein Verfahren zur Aufbereitung von metallionenhältigen Lösungen mittels thermischer Pyrohydrolyse gelöst, wobei die aufzubereitende Lösung in zumindest einem Pyrolysereaktor einer thermischen Pyrohydrolyse unterworfen wird, die hierbei entstehenden Abgase anschließend einer Abgasreinigung zugeführt werden, wobei metalloxidhältige Feinstaubanteile über einen Feststoffabscheider, insbesondere über einen Staubzyklon abgeschieden und über zumindest eine Auslassleitung abgeführt werden, wobei erfindungsgemäß über zumindest eine Eindüsvorrichtung eine Strömung von dem zumindest einen Feststoffabscheider wegführend in der zumindest einen Auslassleitung erzeugt wird.

Besonders bevorzugt ist hierbei vorgesehen, dass zumindest ein Teil der abgeschiedenen Feinstaubanteile über die zumindest eine Auslassleitung in den Pyrolysereaktor eingebracht wird. Hierbei unterstützt die von der zumindest einen Eindüsvorrichtung erzeugte Strömung, die von dem Feststoffabscheider wegführt, den Transport der Feinstaubanteile in den Pyrolysereaktor, während gleichzeitig das Eindringen von gegebenenfalls korrosiven Reaktionsgasen aus dem Pyrolysereaktor in die zumindest eine Auslassleitung unterbunden wird.

Das Verhindern von Korrosion im Bereich der Auslassleitung und in der Folge in dem Feststoffabscheider wird zusätzlich unterstützt, wenn über die zumindest eine Eindüsvorrichtung ein erwärmtes Gas, beispielsweise Luft und/oder Gasgemische eingebracht wird. Durch das erwärmte Gas in der zumindest einen Auslassleitung sinkt die Temperatur in diesem Bereich nicht, sodass die Gefahr der Korrosion durch abgekühlte Reaktionsgase und/oder Feinstteilchen in der zumindest Auslassleitung weiter reduziert wird.

Das erfindungsgemäße Verfahren wird insbesondere für die Aufbereitung von metallionenhältigen Salzsäurelösung, insbesondere Altsäuren aus Normalstahlbeizen oder von Mischsäuren, beispielsweise eine Flusssäure-Salpetersäure-Mischlösung für Edelstahlbeizen eingesetzt.

Im Folgenden wird anhand von nicht-einschränkenden Ausführungsbeispielen mit zugehörigen Figuren die Erfindung näher erläutert. Darin zeigen:

Fig. 1    eine schematische Darstellung eines Fließbettreaktors;

Fig. 2    eine schematische Darstellung eines Sprühröstreaktors; und

Fig. 3    eine Detailansicht der erfindungsgemäßen Eindüsvorrichtung aus den Fig. 1 und Fig. 2.

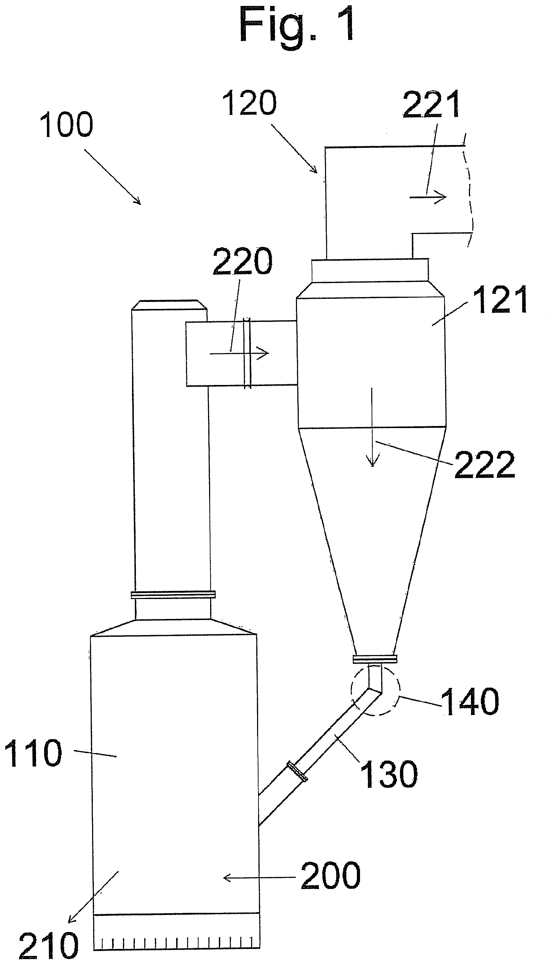

Wie in Fig. 1 dargestellt ist in dieser Ausführung der erfindungsgemäßen Vorrichtung 100 der Pyrolysereaktor 110 als Fließbettreaktor ausgeführt, wobei die darin entstehenden Abgase über eine Abgasreinigungsanlage 120 geführt werden. Diese Abgasreinigungsanlage 120 weist einen Feststoffabscheider 121 auf, der in diesem Ausführungsbeispiel als Staubzyklon ausgeführt ist.

In dem Pyrolysereaktor 110 werden insbesondere gebrauchte Beizsäuren 200, die beispielsweise im Fall von Normalstahlbeizen als Salzsäurebäder durchgeführt werden, einer thermischen Hydrolyse unterzogen. Hauptbestandteil dieser Altsäure ist ein Gemisch aus Wasser, Salzsäure sowie darin gelöstem Eisen-II-Chlorid sowie Chloride weiterer Stahlelemente, insbesondere Vanadium, Mangan, Chrom, Nickel, Zink sowie Molybdän. Diese Chloride werden während der Pyrohydrolyse in die entsprechenden Oxide 210 in Pulverform überführt, die von dem Pyrolysereaktor 110 abgezogen werden. In der Gleichung 1 ist die hierbei verlaufende Hauptreaktion dargestellt.

$$2FeCl_2 + 2H_2O + \tfrac{1}{2}O_2 \leftrightarrow Fe_2O_3 + 4HCl \qquad \text{Gleichung 1}$$

Analoges gilt auch für Mischsäuren, insbesondere Flusssäure-Salpetersäure-Gemische, die in der Edelstahlbeize eingesetzt werden, gemäß den Gleichungen 2 und 3:

$$2FeF_3 + 3H_2O \leftrightarrow Fe_2O_3 + 6HF \qquad \text{Gleichung 2}$$

$$2Fe(NO_3)_3 + 3H_2O \leftrightarrow Fe_2O_3 + 6HNO_3 \qquad \text{Gleichung 3}$$

Das hierbei entstehende Abgas 220 weist zum Einen die gasförmigen Säuren 221 auf, die einem Venturiwäscher zugeführt werden, während die Feinstaubanteile 222 an Metalloxid über einen Staubzyklon abgetrennt und dem Pyrolysereaktor 110 über eine Auslassleitung 130 wieder zugeführt werden. Auf diese Weise gehen keine Metalloxide in der Abgasreinigungsanlage 120 verloren, sondern können in dem Pyrolysereaktor 110 als Feststofffraktion abgezogen werden.

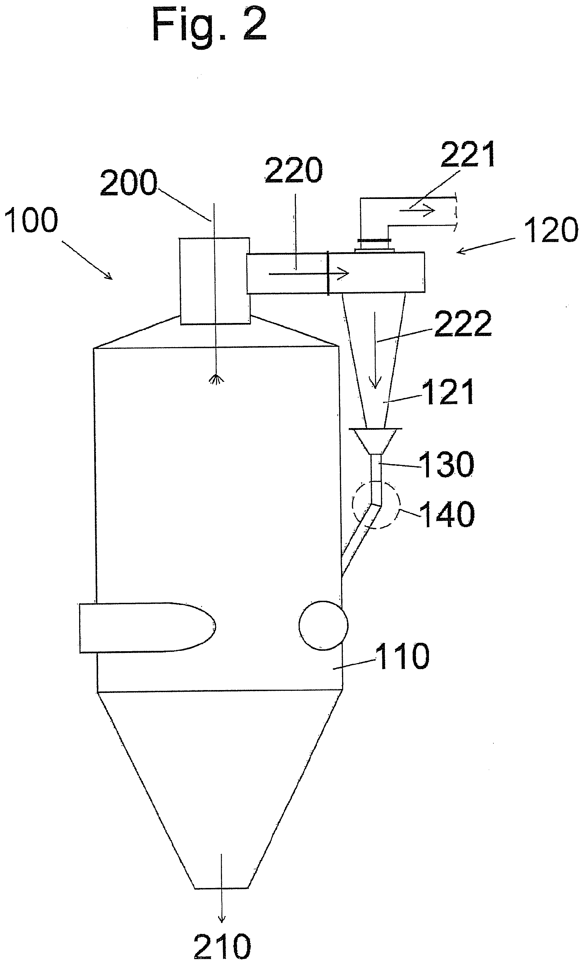

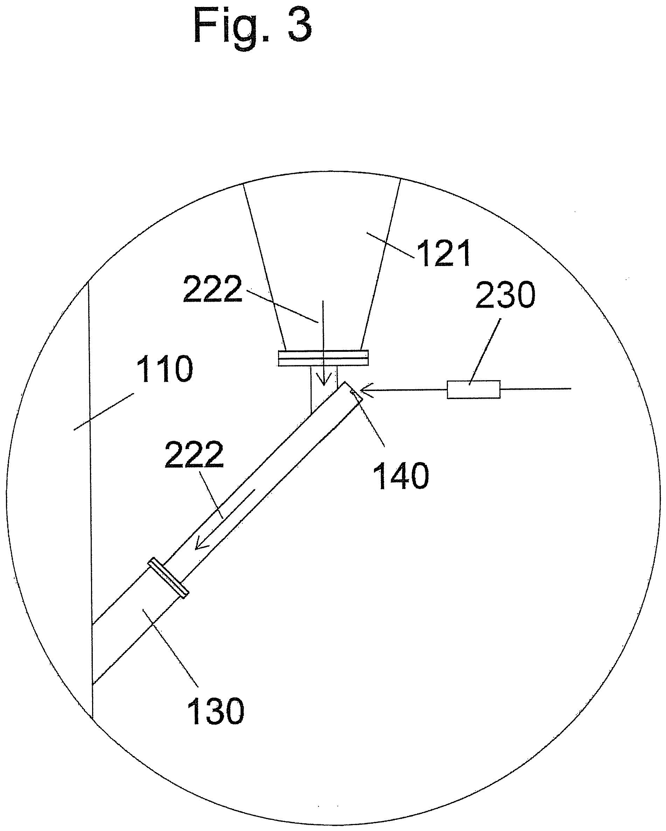

Wie in Fig. 3 dargestellt ist in der Auslassleitung 130 eine erfindungsgemäße Eindüsvorrichtung 140 angeordnet. In der vorliegenden Ausführung der Erfindung ersetzt hierbei diese Eindüsvorrichtung 140, die beispielsweise eine Vielzahl von Lavaldüsen aufweist, die üblicherweise in diesen Anlagen angeordnete Zellradschleuse. Alternativ hierzu kann die erfindungsgemäße Eindüsvorrichtung 140 auch zusätzlich zwischen Zellradschleuse und Pyrolysereaktor 110 angeordnet sein. Die erfindungsgemäße Eindüsvorrichtung 140 hat noch den zusätzlichen Vorteil, dass eine höhere Bauart des Staubzyklons ermöglicht wird, weil aufgrund der durch die Eindüsvorrichtung 140 erzeugten Strömung der Abtransport der Feinstaubanteile 222 in den Pyrolysereaktor 110 zusätzlich unterstützt wird, sodass das Gefälle der Auslassleitung 130 reduziert werden kann, was zu einer geringeren Bauhöhe in diesem Bereich führt. Dies ist insbesondere dann von Vorteil, wenn, wie in Fig. 2 gezeigt, der Pyrolysereaktor 110 ein Sprühröstreaktor ist.

Untersuchungen haben gezeigt, dass durch die von der erfindungsgemäßen Eindüsvorrichtung 140 erzeugte Strömung eine ausreichende Druckdifferenz erzielt wird, die einen Gasrückfluss aus dem Pyrolysereaktor 110 verhindert. Das über die Eindüsvorrichtung 140 zugeführte Gas 230 ist hierbei besonders bevorzugt Luft, wobei diese je nach Reaktionsführung als Kaltluft oder Warmluft zugeführt wird.

Es versteht sich, dass die vorliegende Erfindung nicht auf die oben beschriebenen Ausführungsbeispiele beschränkt ist. Erfindungswesentlich ist, dass in der zumindest einen Auslassleitung eine Eindüsvorrichtung vorgesehen ist, die eine Strömung in der zumindest einen Auslassleitung erzeugt, die einen Abtransport der Feinstaubanteile aus dem Feststoffabscheider wie Staubzyklon oder Elektrofilteranlage begünstigt und gegebenenfalls ein Eindringen von Reaktionsgasen aus dem Pyrolysereaktor verhindert.

**Patentansprüche**

1. Vorrichtung (100) zur Aufbereitung von metallionenhältigen Lösungen (200) mittels thermischer Pyrohydrolyse, mit zumindest einem Pyrolysereaktor (110), mit einer Abgasreinigungsanlage (120) mit zumindest einem Feststoffabscheider (121), insbesondere zumindest einem Staubzyklon, zur Abtrennung von Feinstaubpartikeln (222), und zumindest einer Auslassleitung (130) aus dem zumindest einen Feststoffabscheider (121), **dadurch gekennzeichnet, dass** in der zumindest einen Auslassleitung (130) zumindest eine Eindüsvorrichtung (140) angeordnet ist.

2. Vorrichtung (100) nach Anspruch 1, **dadurch gekennzeichnet, dass** die zumindest eine Eindüsvorrichtung (140) zumindest eine Lavaldüse aufweist.

3. Vorrichtung (100) nach Anspruch 1 oder 2, **dadurch gekennzeichnet, dass** die zumindest eine Auslassleitung (130) mit dem zumindest einen Pyrolysereaktor (110) in Verbindung steht.

4. Vorrichtung (100) nach einem der Ansprüche 1 bis 3, **dadurch gekennzeichnet, dass** zwischen dem zumindest einen Feststoffabscheider (121) und der zumindest einen Auslassleitung (130) zumindest eine Sperreinrichtung, insbesondere eine Klappeneinrichtung oder eine Zellradschleuse angeordnet ist.

5. Vorrichtung (100) nach einem der Ansprüche 1 bis 4, **dadurch gekennzeichnet, dass** der zumindest eine Pyrolysereaktor (110) eine Sprühröstanlage oder Fließbettanlage ist.

6. Verwendung einer Vorrichtung (100) nach einem der Ansprüche 1 bis 5 zur Aufbereitung einer metallionenhältigen Säurelösung, insbesondere einer Salzsäurelösung.

7. Verfahren zur Aufbereitung von metallionenhältigen Lösungen (200), wobei die aufzubereitende Lösung (200) in zumindest einem Pyrolysereaktor (110) einer thermischen Pyrohydrolyse unterworfen wird, die hierbei entstehenden Abgase (220) anschließend einer Abgasreinigung zugeführt werden, wobei metalloxidhältige Feinstaubanteile (222) über zumindest einen Feststoffabscheider (121), insbesondere über einen Staubzyklon abgeschieden und über zumindest eine Auslassleitung (130) abgeführt werden, **dadurch gekennzeichnet, dass** über zumindest eine Eindüsvorrichtung (140) eine Strömung von dem zumindest einen Feststoffabscheider (121) wegführend in der zumindest einen Auslassleitung (130) erzeugt wird.

8. Verfahren nach Anspruch 7, **dadurch gekennzeichnet, dass** zumindest ein Teil der abgeschiedenen Feinstaubanteile (222) über die zumindest eine Auslassleitung (130) in den Pyrolysereaktor (110) eingebracht wird.

9. Verfahren nach Anspruch 7 oder **8, dadurch gekennzeichnet, dass** über die zumindest eine Eindüsvorrichtung (140) ein erwärmtes Gas (230), beispielsweise Luft und/oder Abgase und/oder Gasgemische, eingebracht werden.

10. Verfahren nach einem der Ansprüche 7 bis 9, **dadurch gekennzeichnet, dass** die metallionenhältige Lösung (200) eine saure Lösung, insbesondere eine Salzsäurelösung oder eine Mischsäurelösung, beispielsweise eine Flusssäure-Salpetersäure-Mischlösung ist.

**Claims**

1. A device (100) for treating metal-ion-containing solutions (200) by means of thermal pyrohydrolysis, comprising at least one pyrolysis reactor (110), a waste gas cleaning system (120) having at least one solids separator (121), in particular at least one dust cyclone, for the separation of fine dust particles (222), and at least one outlet line (130) from the at least one solids separator (121), **characterised in that** at least one injection device (140) is arranged in the at least one outlet line (130).

2. A device (100) according to claim 1, **characterised in that** the at least one injection device (140) comprises at least one Laval nozzle.

3. A device (100) according to claim 1 or 2, **characterised in that** the at least one outlet line (130) is in connection with the at least one pyrolysis reactor (110).

4. A device (100) according to one of the claims 1 to 3, **characterised in that** at least one blocking device, in particular a flap device or a rotary valve, is arranged between the at least one solids separator (121) and the at least one outlet line (130).

5. A device (100) according to one of the claims 1 to 4, **characterised in that** the at least one pyrolysis reactor (110) is a spray-roasting unit or a fluidized bed system.

6. Use of a device (100) according to one of the claims 1 to 5 for the treatment of a metal-ion-containing acid solution, in particular a hydrochloric acid solution.

7. A method for treating metal-ion-containing solutions (200), wherein the solution (200) to be treated is subjected to thermal pyrohydrolysis in at least one pyrolysis reactor (110), the resulting exhaust gases (220) subsequently being fed to an exhaust gas purification system, wherein metal-oxide-containing fine dust components (222) are separated via at least one solids separator (121), in particular via a dust cyclone, and are discharged via at least one outlet line (130), **characterised in that** a flow leading away from said at least one solids separator (121) is produced in the at least one outlet line (130) via at least one injection device (140).

8. A method according to claim 7, **characterised in that** at least a part of the separated fine dust components (222) is introduced into the pyrolysis reactor (110) via the at least one outlet line (130).

9. A method according to claim 7 or 8, **characterised in that** a heated gas (230), e.g. air and/or exhaust gases and/or gas mixtures, is introduced via the at least one injection device (140).

10. A method according to one of the claims 7 to 9, **characterised in that** the metal-ion-containing solution (200) is an acidic solution, in particular a hydrochloric acid solution or a mixed acid solution, for example a mixed solution of hydrofluoric acid and nitric acid.

**Revendications**

1. Dispositif (100) permettant la préparation de solutions renfermant des ions métalliques (200) par pyro-hydrolyse thermique, comprenant au moins un réacteur de pyrolyse (110), une installation d'épuration des gaz d'échappement (120) ayant au moins un séparateur de solides (121), en particulier au moins un cyclone de poussière permettant de séparer les particules de poussière fines (222) et au moins une conduite de sortie (130) du séparateur de solides (121),

   **caractérisé en ce qu'**

   au moins un dispositif d'injection (140) est monté dans la conduite de sortie (130).

2. Dispositif (100) conforme à la revendication 1,

   **caractérisé en ce que**

   le dispositif d'injection (140) comporte au moins une tuyère de Laval.

3. Dispositif (100) conforme à la revendication 1 ou 2,

   **caractérisé en ce que**

   la conduite de sortie (130) est reliée au réacteur de pyrolyse (110).

4. Dispositif (100) conforme à l'une des revendications 1 à 3,

   **caractérisé en ce qu'**

   entre le séparateur de solides (121) et la conduite de sortie (130) est monté au moins un dispositif de blocage, en particulier un dispositif de soupape ou une écluse ou un sas rotatif.

5. Dispositif (100) conforme à l'une des revendications 1 à 4,

   **caractérisé en ce que**

   le réacteur de pyrolyse (110) est une installation de grillage par pulvérisation ou une installation à lit fluidisé.

6. Utilisation d'un dispositif (100) conforme à l'une des revendications 1 à 5,

   pour la préparation d'une solution acide renfermant des ions métalliques, en particulier d'une solution d'acide chloridrique.

7. Procédé de préparation de solutions renfermant des ions métalliques (200) selon lequel la solution à préparer (200) est soumise, à une pyrohydrolyse thermique dans au moins un réacteur de pyrolyse (110), et les gaz d'échappement (220) formés sont ensuite transférés à un processus d'épuration des gaz d'échappement, par lequel les particules de poussière fines (222) renfermant des oxydes métalliques sont séparées sur au moins un séparateur de solides (121) en particulier un cyclone de poussière, et évacuées par au moins une conduite de sortie (130),

   **caractérisé en ce qu'**

   au moins un dispositif d'injection (140), permet de créer une circulation du séparateur de solides (121) vers la conduite de sortie (130).

8. Procédé conforme à la revendication 7,

   **caractérisé en ce qu'**

   au moins une partie des particules de poussière fines (222) séparée est introduite dans le réacteur de pyrolyse (110) par la conduite de sortie (130).

9. Procédé conforme à la revendication 7,

   **caractérisé en ce que**

   le dispositif d'injection (140) permet d'introduire un gaz chauffé (230), par exemple, de l'air et/ou des gaz d'échappement et/ou un mélange de gaz.

10. Procédé conforme à l'une des revendications 1 à 9,

    **caractérisé en ce que**

    la solution renfermant des ions métalliques (200) est une solution acide, en particulier une solution d'acide chlorhydrique, ou une solution renfermant un mélange d'acides, en particulier, une solution mixte acide fluoridrique-acide nitrique.

# Fig. 1

# Fig. 2

# Fig. 3

## IN DER BESCHREIBUNG AUFGEFÜHRTE DOKUMENTE

### In der Beschreibung aufgeführte Patentdokumente

- AT 407758 B
- AT 509052 B1
- DE 60125221 T2
- WO 9627554 A1
- EP 0850881 A1